# EUROPEAN PATENT APPLICATION

(11) **EP 4 274 116 A1**
(43) Date of publication of application: **08.11.2023**
(21) Application number: 22171741.6
(22) Date of filing: 05.05.2022
(51) Int. Cl.: H04B 7/14, H04W 84/02, H04W 12/50, H04W 76/00

(54) **METHOD AND DEVICE TO PROVIDE A RELAY FOR USE IN WIRELESS CONFIGURATION**

(71) Applicant: Koninklijke Philips N.V., 5656 AG Eindhoven (NL)
(72) Inventor: BERNSEN, Johannes Arnoldus Cornelis, Eindhoven (NL)
(74) Representative: Philips Intellectual Property & Standards

(57) **Abstract**

There is disclosed a relay device , the relay device being arranged to cooperate with a Configurator according to a configuration protocol that enables to configure wireless networks and at least one wireless communication device to associate with a wireless network, the configuration protocol using the wired and/or wireless network connection, the relay device being arranged to communicate with the at least one wireless communication device , via a transceiver, according to a wireless communication protocol, the relay device comprising a processor arranged
-to provide to the Configurator, via the configuration connection an indication of a configuration of the transceiver. A Configurator device may receive the indication of the configuration and perform, based on the indication and information concerning an Enrollee device, one or both of a selection of a suitable relay or issuing a command to the relay device to change the configuration of the transceiver

## Description

### FIELD OF THE INVENTION

The invention relates to a method and device to provide and configure a wireless network.

### BACKGROUND OF THE INVENTION

Wireless devices may securely connect to a wireless network using a configuration protocol, for example the Device Provisioning Protocol (DPP, see [DPP]), which is a protocol for configuring the wireless communication device, e.g. communicating according a wireless communication protocol such as Wi-Fi, using a DPP Configurator device in order to get access to a wireless network (identified by a Service Set Identifier, SSID) provided by a network access device, e.g. a Wi-Fi Access Point (AP). A device such as a wireless device trying to obtain access to a network is called an 'Enrollee', and in the case of DPP, a 'DPP Enrollee'. A device used for performing the configuration of the Enrollee so that the Enrollee may obtain the access is called a 'Configurator' or sometimes a 'commissioner'. It should be noted that, in this application, the acronym DPP means any version of DPP, e.g. DPP R1, DPP R2 and any successor release. Recently, the Wi-Fi Alliance decided to replace the name DPP by Wi-Fi Easy Connect. These names are used interchangeably in this text. It should also be understood that the devices and methods disclosed herein are applicable to other commissioning protocols and other radio technologies, for example those based on IEEE 802.15.4, cellular technologies or indeed others.

The DPP specification [DPP] specifies specific Wi-Fi frames for the exchange of DPP messages. Almost all DPP messages use 802.11 Public Action frames with the exception of the DPP Configuration Request/Response frames, which include a similar header format, but are exchanged using vendor specific Generic Advertisement Service (GAS) Public Action frames. We call the usage of DPP with these specific Wi-Fi frames "DPP over Wi-Fi" in this text. Another commissioning protocol may also use specific Wi-Fi frames, analogous to those of DPP but with the applicable differences i.e. 'commissioning over Wi-Fi' frames. These specific Wi-Fi frames can be sent by one Wi-Fi device to any other Wi-Fi device in radio range (RF range). It should be noted that these specific Wi-Fi frames do not require the sending and receiving devices to be associated with an AP. It is also not required that either of the two devices has to be an AP. This is in contrast with the transfer of TCP/IP packets over Wi-Fi for which a Wi-Fi device needs to associate with an AP first and connect to the network (or SSID) that the AP is providing. TCP/IP packets are the packets that are used by much of the Internet traffic such as e.g. web browsing. TCP/IP packets can be addressed to any IP address and can travel from device to device over many hops. Hops are the links between these devices. These links may use a link layer technology such as Ethernet, or Wi-Fi. In other words, the specific Wi-Fi frames are messages on the so-called link layer or layer 2 messages and the TCP/IP packets are transferred on the network layer or layer 3 of the ISO- Open Systems Interconnection (OSI) model of networking.

The implementation of the DPP protocols requires access to low-level software in a Wi-Fi enabled device. This may not be a problem for a device running an open OS such as Linux, but it is very difficult or impossible to access this low-level software by an app on a smart phone. This may make using such a device as either a network access device (e.g. a soft AP) or a Configurator with a commissioning protocol such as DPP difficult.

An addition in release 2 of the DPP specification is the specification of how the above-mentioned specific Wi-Fi frames can be tunnelled over a TCP/IP connection. This is called "DPP over TCP/IP" in this text. This addition enables devices that do not support DPP over Wi-Fi to configure other DPP devices. Another addition in release 2 of the DPP specification is the specification of a DPP over TCP/IP relay. A device supporting DPP over Wi-Fi may make this relay available. The relay transforms incoming "DPP over TCP/IP" packets into "DPP over Wi-Fi" frames and transmits them as Wi-Fi frames using its Wi-Fi radio. The relay also transforms received "DPP over Wi-Fi" frames into "DPP over TCP/IP" frames and forwards them as TCP/IP packets over its Ethernet connection(s) and over the Wi-Fi networks (or SSIDs) it has associated with as Wi-Fi non-AP device or the Wi-Fi networks (or SSIDs) that it provides as an AP. A convenient approach is to provide the relay functions as part of the functions of the network access device. It should be understood that similar issues and solutions may be present in other commissioning protocols, particularly those for use with wireless networks other than Wi-Fi.

Network access devices, e.g. APs, may, out-of-the-box, create a, usually open, Wi-Fi network (or Service Set Identifier (SSID)) on which they have a server running that implements a user interface (UI) through which they can be configured. The IP address of this UI server is usually the gateway address of the TCP/IP stack of the device. The gateway address of a router such as an AP is the interface through which it sends packets out of its local network and usually to the Internet. Through the UI, the e.g. initially open network may be configured to become secure using a Wi-Fi passphrase or a Pre-shared Key (PSK). The UI server itself may also be protected by a user ID/password combination. The AP may support multiple SSIDs using only one radio using a technique called VLAN (virtual local area network) tagging, see [802.1Q],

The AP may provide TCP/IP access for configuration through a connection with an open Wi-Fi network run by the AP, e.g. Wi-Fi Enhanced Open [WiFi_EO], or a legacy network without encryption. An AP may also provide TCP/IP access for configuration through a local area network like ethernet or a combination of ethernet links and wireless links such as Wi-Fi between an AP and a Wi-Fi device associated with that AP.

In the present disclosure, the term 'Configurator' may be replaced by 'commissioning device'

### SUMMARY OF THE INVENTION

The inventor has realised that network configuration as described above has problems, in that a Configurator which accesses the radio network via a relay has certain limitations placed upon its access.

It is an object of the invention to provide methods and devices for configuring a network that alleviate at least one of the above-mentioned problems. According to an aspect, there is provided a relay device, the relay device being arranged to cooperate with a Configurator according to a configuration protocol that enables to configure wireless networks and at least one wireless communication device to associate with a wireless network, the configuration protocol using the wired and/or wireless configuration connection, the relay device being arranged to communicate with the at least one wireless communication device, via a transceiver, according to a wireless communication protocol,
the relay device comprising a processor arranged
- to provide to the Configurator, via the configuration connection an indication of a configuration of the transceiver.

In many cases, relay devices may be coupled to transceivers that are already set up for a wireless communication network and will already set up to use certain channels and/or frequencies. New Enrollee devices may not be listening on those channels/frequencies. In such a situation, unless the transceiver being used by the relay device changes channel/frequency, the configuration attempt will not succeed because, at some point, the Enrollee device will fail to respond to a message sent to it via the transceiver.

DPP Relays are frequently part of an AP. The most important goal of an AP is making the highest throughput possible for the associated Wi-Fi devices ("STAs"). Therefore, an AP wants to remain on the same channel for each of its radios (an AP may have more than one radio, each working on another channel in the same or different frequency bands).

The Configurator, if it knows the channels the Enrollee is listening on, e.g. from the channel ABNF rule in the DPP Bootstrapping URI (section 5.2.1 of [DPP]), will want to select the relay device that is actually using at least one of the channels that the Enrollee is listening on. However, the Configurator does not know which channel(s) the relay device's radio(s) is/are using.

By receiving information on the configuration, the Configurator may be able to select a relay device which is coupled to a suitable configured transceiver (where multiple options of a relay device-transceiver are available). Also, where the function controlling the transceiver permits, the Configurator may be able to change the configuration of the transceiver to one which suits the Enrollee device.

According to an embodiment, the processor is arranged to convert messages between a first format of the configuration protocol and a second format of the wireless communication protocol. This allows Configurators that only use an IP-based protocol to configure an Enrollee for a wireless communication protocol.

According to an embodiment, the indication of a configuration comprises an indication of at least one parameter value, the at least one parameter being at least one from the set of radio channel and a frequency, the parameter value corresponding to a setting of the transceiver. The Configurator will then be able to compare the settings of channel and/or frequency of the transceiver with those of the Enrollee device.

According to an embodiment the processor is arranged to receive a command the command comprising a setting for the transceiver, and, responsive to the command, cause the transceiver to use the setting for communication using the wireless communication protocol. Thus the Configurator can cause and ensure that the transceiver will use a channel/frequency that the Enrollee device is listening on.

According to an embodiment, the indication is provided using an mDNS advertisement. This makes them easily available to Configurators using IP-based protocols.

According to an embodiment, the configuration protocol is the Device Provisioning Protocol (DPP) over TCP/IP.

According to an aspect, there is provided a network access device, the network access device comprising a transceiver for wireless communication with the wireless communication device according to a wireless communication protocol and comprising at least one relay device.

According to an aspect, there is provided a Configurator arranged to cooperate with the relay device according to a configuration protocol that enables the Configurator to configure wireless networks and at least one wireless communication device to associate with a wireless network, the Configurator comprising a communication unit arranged to communicate according to a wired and/or wireless network communication protocol; and
a processor system arranged to establish, via the communication unit, a configuration connection according to the wired and/or wireless network communication protocol to the relay device, the Configurator being arranged, while cooperating with the relay device, to receive from the network access device, an indication of a configuration of the transceiver and to receive, via an out-of-band channel an information from the at least one wireless communication device acting as an Enrollee device, the Enrollee device having an Enrollee transceiver arranged for wireless communication using the wireless communication protocol of the relay device, the information comprising an indication of a parameter value of the Enrollee transceiver.

According to an embodiment, the Configurator is arranged to select a relay device from a plurality of relay devices, the selection being based on a correspondence between the indication the of a configuration of the Enrollee transceiver and indication of a configuration of the transceiver.

According to an embodiment, the processor is arranged to send a command via the configuration connection, to the network access device, the command comprising a parameter value for the transceiver of the network access device.

According to an embodiment, the Configurator is arranged to engage, while cooperating with the relay device via the configuration connection, in configuration of a wireless communication device to enable association of the wireless communication device with the wireless network.

According to an aspect, there is provided, a method for use in a relay device, the relay device being arranged to cooperate with a Configurator according to a configuration protocol that enables to configure wireless networks and a wireless communication device to associate with a wireless network, and being arranged to communicate with a network access device, the network access device having a transceiver, and being arranged to communicate, via the transceiver, with the wireless communication device according to a wireless communication protocol, the method comprising establishing a configuration connection according to the network communication protocol by association of the Configurator to the configuration network, providing to the Configurator, via the configuration network and indication of a parameter of the transceiver.

According to an embodiment, the method comprises converting messages between a first format of the configuration protocol and a second format of the wireless communication protocol.

According to an embodiment, the providing to the Configurator of the indication of a configuration of the transceiver is performed using an mDNS advertisement.

According to an embodiment, the method comprises receiving a command from the Configurator to change a parameter of the transceiver to a value provided by the Configurator.

According to an aspect, there is provided a method for use in a Configurator device as defined above, the Configurator being arranged to cooperate with a relay device as defined above and to configure a wireless communication device, the wireless communication device having a wireless device transceiver arranged to communicate using a wireless communication protocol with the relay device, the method comprising receiving a first indication from a relay device, the indication comprising an indication of a parameter of the transceiver, obtaining a second indication, via an out-of-band channel, of a parameter of the wireless device transceiver, and sending a command to the relay device to cause the network access device to adapt a parameter of the transceiver according to a value provided by the Configurator.

According to an aspect, there is provided a Configurator device, the Configurator being arranged to cooperate with a relay device and to configure a wireless communication device, the wireless communication device having a wireless device transceiver arranged to communicate using a wireless communication protocol with the relay device, the method comprising
- receiving a first indications from a plurality of relay devices, the indication comprising an indication of a parameter of the transceiver;
- obtaining a second indication, via an out-of-band channel, of a parameter of the wireless device transceiver, and
selecting a relay device according to a correspondence between the first and second indications to be used for configuration of the wireless network device

According to an embodiment, the method comprises sending a command to the network access device to cause the network access device to adapt a parameter of the transceiver according to a value provided by the Configurator.

According to an embodiment, the provisioning protocol is the Device Provisioning Protocol (DPP) over TCP/IP.

According to an aspect, there is provided a computer program product on a computer readable medium, the computer program product being arranged, when run on a processor of a device, causes the device to perform the methods described above.

### BRIEF DESCRIPTION OF THE DRAWINGS

These and other aspects of the invention will be apparent from and elucidated further with reference to the embodiments described by way of example in the following description and with reference to the accompanying drawings, in which
Fig. 1 shows a communication system in which the invention may be practiced,
Fig. 2 shows a flow diagram of a configuration process,
Fig. 3 shows a communication system having a Configurator and result of initial configuration steps,
Fig. 4 shows the result of the further configuration steps,
Fig. 5 shows the result of the further configuration steps,
Fig. 6 shows the result of the further configuration steps,
Fig. 7a shows a computer readable medium, and
Fig. 7b shows in a schematic representation of a processor system.

The figures are purely diagrammatic and not drawn to scale. In the Figures, elements which correspond to elements already described may have the same reference numerals.

### DETAILED DESCRIPTION OF THE EMBODIMENTS

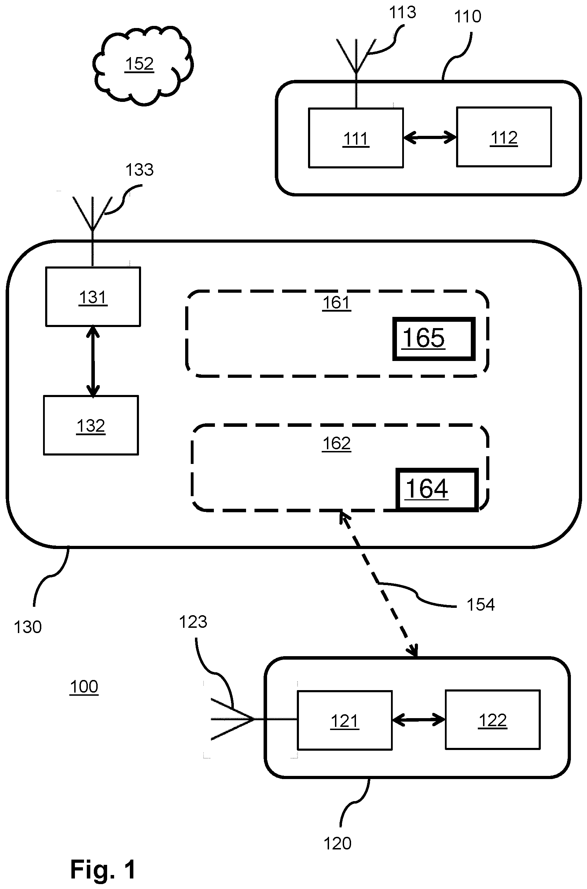

Fig. 1 shows a communication system 100 comprising first 110, second 120 and third devices 130. An external network 152 is also shown, for example the internet. Each of these devices has a transceiver 111, 121, 131 comprising suitable transmitters and receivers for wireless communication over a physical channel such as Wi-Fi, Bluetooth^{™} or any other suitable technology. The devices may have an input/output unit for communicating over a wired physical channel, and may comprise at least one antenna 113, 123, 133 acting as input/output for a wireless physical channel. Each of the devices would operate under the control of a processor 112, 122, 132. The transceiver, the processor and further elements of the device may be integrated in a single system on a chip. Communication between the transceiver and the processor is schematically indicated by a solid arrow. Each of the devices may have a user interface having at least one user control element (not shown). For example, the user control element may comprise a touch screen, various buttons, a mouse, touch pad and so on. Buttons may be traditional physical buttons, touch sensors, or virtual buttons, e.g. on a touch screen or icons to be activated via a mouse. The user interface may also be a remote user interface.

The second device may be a network access device 130 for providing wireless networks, for example an access point, a router, etc. The first device may be a wireless communication device 110 such as a mobile phone, laptop or tablet having an end user. It could also be an IoT (internet of things) type of device. The user of the first device may be interested in establishing a connection to the network access device for accessing one or more resources provided via the second device, for example to access an external network 152 like the internet. The wireless communication device 110 may be called an Enrollee desiring to associate with the wireless network.

The third device may be a Configurator 120 for configuring a wireless network according to a configuration protocol that enables to configure wireless networks and wireless communication devices to associate with a wireless network. The network access device 130 is arranged to cooperate with the Configurator 120 according to the configuration protocol.

In the present example, a relay device 164, having the function of a relay (i.e. transforming DPP/Commissioning over TCP/IP packets into DPP/Commissioning over Wi-Fi frames and the other way around) is present in the network device 130. This may often be the case out of simple convenience, since the AP is already equipped for communication using TCP/IP with the network 152 and with the devices 110 and 120 using Wi-Fi if these devices are associated with the AP. Furthermore, APs may also provide one or more ethernet ports providing a local area network (LAN) over which TCP/IP connections can be made between the devices on the LAN and between a device on the LAN and one associated with the AP. However, it may be possible to have a fourth device (not shown) acting as the relay. In the attached drawings, the relay device 164 is represented inside the network access device 130. However this is merely an example and should not be understood to imply that the relay device 164 must be inside or co-located with the network access device 130. Where the relay device 164 is part of an access point, the function of a processor for the relay may be provided by a processor 132 in the network access device 130. Where the relay device 164 is separate from the network access device 130, part of the functionality of processor 132 will be present in the relay device 164, the transceiver 131 may be used by the relay device for Wi-Fi communication (both for e.g. transceiving the DPP/Commissioning over Wi-Fi frames with DPP Enrollees and for transceiving TCP/IP packets with an access point), and any (not shown) ethernet port will be used for e.g. TCP/IP packets. Also, for a relay device 164 that is separate from the network access device 130, it may also be the case that the relay device 164 has or uses a transceiver distinct from that of the network access device 130.

It should also be understood that the relay may be converting DPP over TCP/IP packets into "DPP over radio" frames where the radio is something other than Wi-Fi and the DPP protocol has been adapted to this.

In the network access device, the processor 132 may be arranged to accommodate a first wireless network as an operational network 161. The operational network may be arranged to enable access to an external network 152 using a network communication protocol, for example TCP/IP. Furthermore, the processor may be arranged to accommodate a second wireless network 162 which operates as a configuration network 162 through which a connection with the TCP/IP input/output of relay device 164 may be made. This second network may include the relay device 164, the Configurator 120 and eventually a wireless network device 110 being configured. The configuration network 162 may be arranged to not provide access to the external network 152 after configuration of the operational network. In a practical example both wireless networks have respective network identifiers, e.g. SSID, while virtual local area network, VLAN, technology may be applied to create both SSIDs via a single transceiver.

Also, the processor is arranged to enable establishing a configuration connection 154 according to the network communication protocol (TCP/IP) by association of the Configurator 120 to the configuration network. This connection may be by any physical means such as wireless, wired, optical or any combination thereof.

Optionally, the network access device may be arranged to provide, using an out-of-band channel, out-of-band (OOB) information on the configuration network for enabling the Configurator to cooperate with the network access device. For example, the OOB information may be a QR code including a network identifier SSID and further access data, port addresses, security data etc. The network access device may further be arranged to accommodate, while cooperating with the Configurator via the configuration network, configuration of the operational network, and configuration of a wireless communication device to enable association of the wireless communication device with the operational network.

In the following embodiments the network access device may be called access point AP, the configuration protocol may be the device provisioning protocol DPP, see [DPP]. The wireless communication protocol may be Wi-Fi, and the network communication protocol may be TCP/IP. One of the communicating devices in case of TCP/IP is the TCP client and the other is the TCP server. It may be understood that the other devices may also serve as both TCP client and TCP server. In case the network communication protocol is TCP/IP, the port address or port information may include whether the device is the TCP server or TCP client.

Providing TCP/IP access to basic Configurators by an AP may be done through a connection with an, at least initially, open wireless network, usually called association, without encryption, for example Wi-Fi Enhanced Open, see [WiFi_EO]. The network created through the open Wi-Fi connection is identified by a configuration SSID. Later on, another SSID is created by the same AP for operational communication, which is identified by an operational SSID. The configuration SSID may be removed or stopped after configuration. If not, both networks (SSIDs) need to be separated from one another. To accomplish the separation, the AP may use VLAN tagging by creating VLAN1 for the configuration SSID and VLAN2 later on for the operational SSID. The use of a VLAN for the configuration SSID is not required when the configuration SSID is stopped when the operational SSID is started.

For example, for DPP configuration, the AP needs to make two destinations available on the configuration SSID, namely
- the IP address/port number for being configured through DPP over TCP/IP itself, and
- the IP address/port number of its DPP over TCP/IP relay.

The port number to be used in both cases may be 8908, which number is fixed in the DPP specification for the DPP over TCP/IP relay, in which case the port number does not need to be included in the OOB information. Further on it is described how the IP addresses are conveyed. The AP may further indicate in the OOB information whether it is the TCP client or TCP server for each IP address/port number included in the OOB information.

In addition, the AP may make a remote UI available on its configuration SSID for being configured by a user for all non DPP over TCP/IP functionality, e.g. on port 80 of its gateway address. Making a remote UI available by a device on a network may mean, e.g., providing by that device one or more web pages with which a user can interact using, e.g., a browser on another device to control the first device. The gateway address may also be used for being configured through DPP over TCP/IP itself or for the DPP over TCP/IP relay. However, the gateway address cannot be used for both purposes together, since they share the same port number 8908.

The AP may limit the functionality available on the configuration SSID to the above three, i.e. the IP address/port number for being configured itself, the DPP over TCP/IP relay and the remote UI. In particular, access to the external network may not be provided at all or may at least be limited to be temporary only or limited to specific purposes regarding configuration. Otherwise, any Wi-Fi device might be able to connect to e.g. the Internet.

In the event that the AP is later on configured to provide a DPP Wi-Fi network or SSID, the AP may make the IP address/port number available on this DPP SSID of its DPP over TCP/IP relay, or a further instance thereof, for Configurators that do support a DPP Wi-Fi stack. Effectively, the Configurator may then configure Enrollees that only support Wi-Fi bands that the Configurator itself does not support, but that the AP does support (e.g. 802.11ah). Existing Configurators may have different functionalities, such as a Configurator that can do DPP over TCP/IP, which may be called a legacy Configurator, and a Configurator that can do DPP over Wi-Fi, which may be called a Wi-Fi enabled Configurator. See also the explanation below.

The AP may support an IP address/port number for being configured itself by DPP over TCP/IP on the DPP Wi-Fi network (or SSID). Optionally, the AP may be configured by DPP over Wi-Fi and over TCP/IP and providing both may be beneficial, because it can then be configured by each of the two types of Configurators. Configurators may connect to the IP address/port for DPP configuration of the AP itself on the Configuration SSID on VLAN1, where this is required. The AP providing an IP address/port number for being configured itself by DPP over TCP/IP on the DPP Wi-Fi network (or SSID) offers more flexibility for Configurators.

It may be necessary to configure the AP and in particular, the relay function. For this, the AP may provide out-of-band (OOB) information, e.g. shows a DPP bootstrapping URI on its display, a sticker or makes it available over NFC, Bluetooth^{™} or any other suitable Out-of-Band technology. Advantageously, the bootstrapping URI may include the configuration SSID and the IP address for being configured itself by DPP over TCP/IP. This DPP bootstrapping URI makes it also possible to configure this AP using a DPP Configurator that does support DPP over Wi-Fi, but this document does not further describe the DPP over Wi-Fi, see [DPP].

In an optional step 201 "Capture DPP URI (OOB)" the Configurator scans the DPP bootstrapping URI of the AP or gets this through NFC. In step "202 Associate with Configuration SSID" the Configurator connects (associates) with the configuration SSID indicated by the SSID attribute in the DPP bootstrapping URI of the AP. The association with the configuration SSID makes it possible for a legacy Configurator to set up TCP/IP connections with IP address and port number combinations reachable on network of the configuration SSID. Also, the Configurator may learn the IP address and port number of the DPP over TCP/IP relay on the Configuration SSID from the beacon of the configuration SSID or the bootstrapping URI or any of the other ways indicated above or below such as mDNS advertisements.

In step 204 the Configurator uses the combination of IP address indicated by the HOST attribute in the (DPP) bootstrapping URI of the AP or any of the other ways indicated above and the DPP port number 8908 to configure the AP itself, for example by creating an operational network, using DPP over TCP/IP over the configuration SSID. The new network may be a DPP network, which is assumed in the remainder of these steps, which steps will be explained below with the following figures. It should be understood that the steps 201 - 204 may only apply in the situation where the AP has the relay associated with it (e.g. the AP is hosting the relay device 164) and where the AP needs configuring before the configuration of the wireless network device 110 can start. In case of a stand-alone relay, creating a TCP/IP connection between device 130 and Configurator 120 should be done in another way, examples of which are given above.

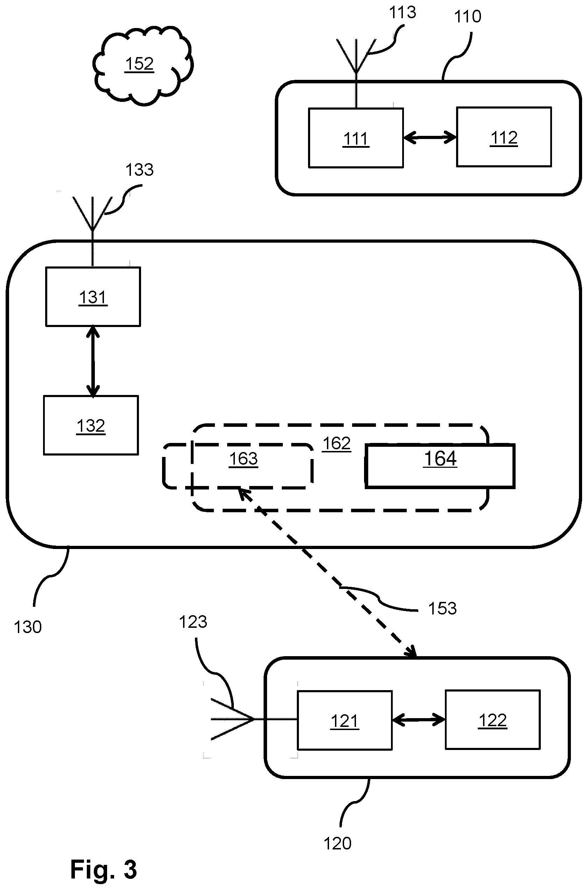

Fig. 3 shows a communication system having a Configurator and result of initial configuration steps, numbered 201, 202 and 204 above. The figure schematically shows the devices as described with Fig. 1 and a configuration network 162, e.g. a configuration SSID on VLAN1. Additionally, the configuration network 162 has a configuration tunnel 163, the tunnel enabling messages according to the configuration protocol to be transferred via the configuration connection 154, e.g. a DPP over TCP/IP configuration port, through which tunnel the AP itself can be configured. The configuration network 162 further provides a configuration port, which provides access to the TCP/IP input/output of relay 164, for example a DPP over TCP/IP relay. The relay is arranged for relaying configuration messages between the configuration connection 154, 155 or 173 and wireless communication. For example, the relay may convert messages on the configuration network to and from special Wi-Frames sent/received via the Wi-Fi transceiver. Hence messages according to the configuration protocol are subsequently transferred using the wireless communication protocol, e.g. DPP over Wi-Fi. Thereto the configuration relay 164 has a part that communicates using TCP/IP packets in the configuration SSID or over ethernet and a part that communicates using the specific Wi-Fi frames outside the configuration SSID, which part is shown extending beyond the dashed box 162. In Fig. 3 an arrow 153 shows the result of steps 201 - 204 above, providing DPP over TCP/IP through association with Configuration SSID, the arrow coupling the Configurator to the configuration tunnel.

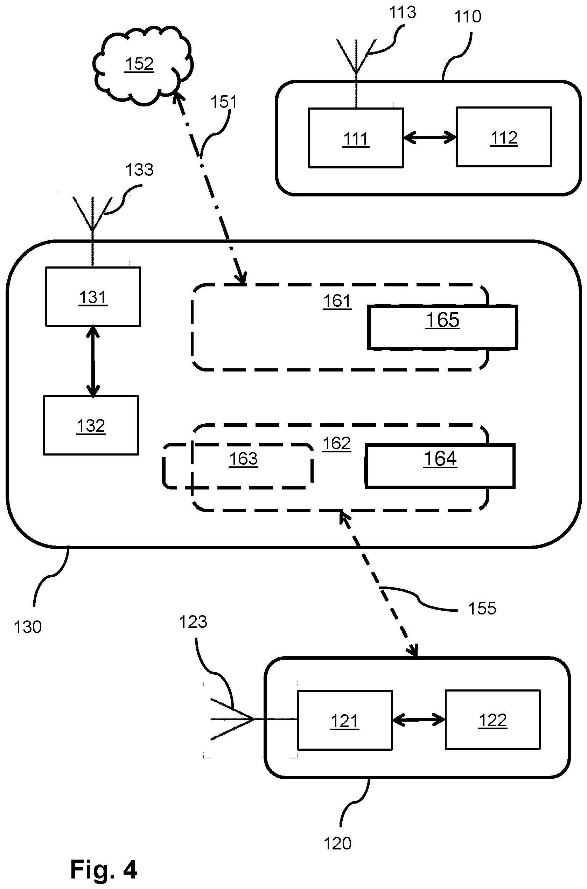

Fig. 4 shows the result of the further configuration steps. The figure schematically shows the devices as described with Fig. 3 and an operational network 161, e.g. a DPP SSID on VLAN2. The Configurator has now configured the operational network, which may be a DPP network. i.e. a network where the AP and devices wanting to associate with it exchange their DPP Connectors using the Network Introduction protocol as specified in section 6.6 of [DPP].

The operational network provides access to the external network 152 as indicated by arrow 151, e.g. via a wired ethernet connection. Additionally, the operational network may have a further relay 165, e.g. a DPP over TCP/IP relay. Arrow 155 schematically shows that TCP/IP connections are possible through association with Configuration SSID. In step 204 "Configure AP using DPP over TCP/IP" the AP is configured.

In step 206 "Start DPP SSID" the operational network 161 is started, e.g. the AP starts the DPP network as configured by the Configurator. VLAN tagging may be used to keep the DPP SSID separate from the configuration SSID, thereby preventing any device associating with the configuration SSID of the AP to be able to connect to the external network, e.g. Internet.

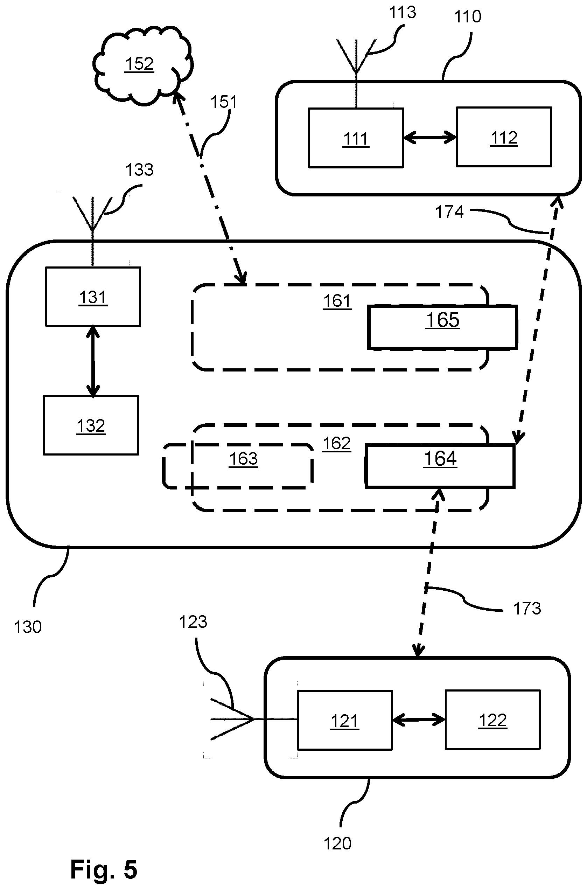

Fig. 5 shows the result of the further configuration steps. The figure schematically shows the devices as described with Fig. 4. In step 207 "Capture DPP URI (OOB)", the Configurator bootstraps with a DPP Enrollee 110 via e.g. capturing a QR code containing the DPP bootstrapping URI of that Enrollee and starts the DPP protocol with the Enrollee via the relay 164, for example with the Enrollee as a Responder.

Starting the configuration protocol may be via the TCP/IP connection on the configuration SSID of the AP using the IP address / port 8908 of the DPP over TCP/IP relay, subsequently using DPP over Wi-Fi. In step 208 "Configure DPP Enrollee using DPP over TCP/IP", the Configurator configures the DPP Enrollee through the DPP over TCP/IP relay of the AP as indicated by an arrow 173. Subsequently, in step 209 "DPP over Wi-Fi" the messages are transferred using the wireless network protocol, as indicated by an arrow 174. Note that the communication over arrow 174 may use the transceiver 131 and that the communication over arrow 173 may use transceiver 131 or a (not shown) ethernet port of the device 130.

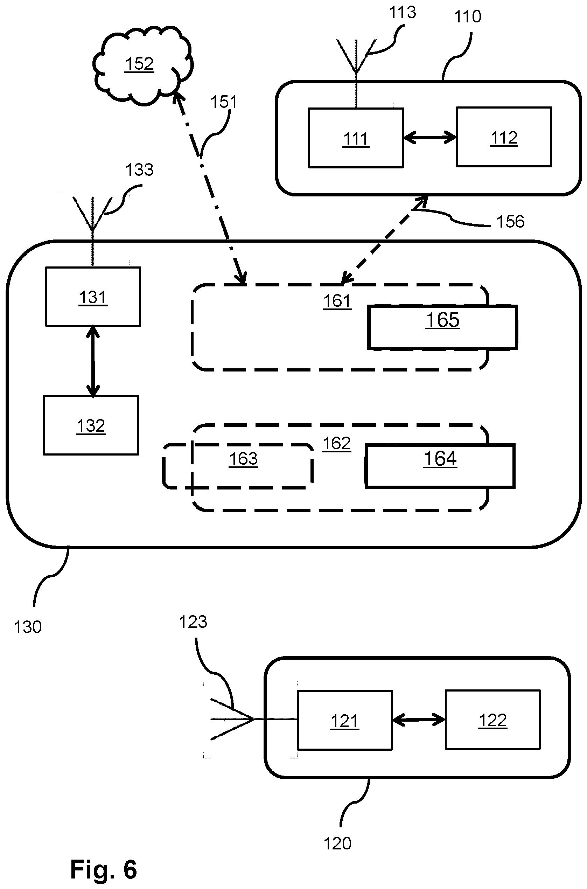

Fig. 6 shows the result of the further configuration steps. The figure schematically shows the devices as described with Fig. 5. In a final step 210 "Associate with DPP SSID" the Enrollee configured by the Configurator in the preceding steps 208, 209, now connects to the operational network by association. Arrow 156 indicates that TCP/IP connections are possible through said association with DPP SSID. It should be noted that the reference here to 'DPP SSID' is purely by way of example and that the equivalent entities for other, non-DPP and Wi-Fi-based networks may be substituted.

Steps 207 to 210 are considered in more detail below. These correspond to the configuration of the Enrollee.

Commonly, a commissioning process commences with the commissioning device (the Configurator, in the case of DPP) and the Enrollee device i.e. the Configurator can start the commissioning process as an Initiator. At step 207, in the case of DPP and, indeed, other protocols, it acquires bootstrapping information (e.g. the DPP Bootstrapping URI) of the Enrollee first. The Enrollee DPP Bootstrapping URI contains at least the public bootstrapping key of the Enrollee. It may also contain one or more Wi-Fi channels, e.g. from the channel ABNF rule (section 5.2.1 of [DPP]), on which the Enrollee is listening.

Where the bootstrapping URI of the Enrollee is in the form of a QR code, the relevant Wi-Fi channels may be encoded in the QR Code.

Where the bootstrapping information is acquired via another radio technology such as NFC, the Wi-Fi channels may in the form of a record received via the other radio technology. In the case of DPP, this is termed an Alternative Carrier Record. In general, the Alternative Carrier Record points to a Carrier Configuration record containing an application defined MIME type. In the case of DPP, the Alternative Carrier Record points to a Carrier Configuration record containing "application/vnd.wfa.dpp" to indicate DPP and a DPP Bootstrapping Uniform Resource Identifier (URI), see reference document [RTD-URI], that contains a public bootstrapping key and that may contain a MAC address and a Wi-Fi only channel list. The Alternative Carrier Record may be used to indicate other technologies, such as Wi-Fi P2P [P2P], Wi-Fi Simple Configuration [WSC], Bluetooth [BT], 802.15.4 [802.15.4], ZigBee [ZIGBEE], Thread [TR-ZIG], etc. Thread is an IPv6 networking protocol built on open standards, designed for secure, low-power 802.15.4 mesh networks. The Wi-Fi standard 802.15.4, see reference document [802.15], is the MAC/PHY layer for both Zigbee (http://www.zigbee.org/) and Thread (https://www.threadgroup.org/).

At step 208, once the Configurator has acquired the bootstrapping URI of the Enrollee, it can start the configuration process. In the case of DPP, the first phase of configuration is the DPP Authentication protocol which is initiated by the Configurator sending a DPP Authentication Request message to the MAC address of the Enrollee, if the Configurator knows that MAC address, e.g. from the DPP Bootstrapping URI of the Enrollee, or to the broadcast address. For a direct connection between Configurator and Enrollee, if the Configurator knows one or more channels on which the Enrollee is listening, e.g. from the DPP Bootstrapping URI of the Enrollee, it can try each of these channels until it gets a response from the Enrollee. Otherwise, the Configurator has to try all Wi-Fi channels it supports. However, in the case where a relay is being used, the Configurator is restricted to trying those channels (or frequencies) being used by the radio side of the relay.

Present systems deal with many aspects of the individual device connections. However, despite this fact, the inventor has realized the present systems still have a number of unexpected problems.

The device that will act as a relay will, in most cases, be set up to use certain Wi-Fi channels/frequencies.

Currently, the commissioner/Configurator does not have means of knowing which the channels/frequencies are being used by the relay device. This is because the Configurator is coupled to the IP side of the relay and not the radio side.

A first situation in which a problem may arise is where there are multiple relays available and there is at least one relay which is coupled to a transceiver using a channel or channels on its radio side which correspond to the channel(s) on this the Enrollee is listening. It would be most convenient if the commissioner/Configurator could select the relay which happens to be using the same channels as those on which the Enrollee is listening. Firstly, and assuming there is a relay using a channel to which the Enrollee is actually listening, were the Configurator to select a relay which is not using a channel on which the Enrollee is listening, the configuration process will stop because the Enrollee will fail to reply to a message. In the case of DPP, the Enrollee will not reply to the DPP Configuration Request. If this happens, the Configurator will need to try another relay and/or inform the user of the problem.

When the relay device is part of an AP, the problem is more acute because AP's are generally set up to maximize throughput for the STA associated with it. Therefore, the AP would 'prefer' to remain on a given channel, rather than change channels. It may be the case that there are multiple relays housed in the same AP, particularly where the AP has multiple radios which may each be set up to use different frequencies. The same constraint i.e. not changing channel/frequency applies to each. Whilst having the Configurator try one relay after another might work, this is undesirably inefficient - even where the relays are co-located in one AP.

According to an embodiment, the relay device specifies the radio (e.g. Wi-Fi) channel or channels that the transceiver is using in mDNS advertisements. The relay service is published as the "_relay" subservice of the DPP service ("_dpp._tcp") so as "_relay._sub._dpp._tcp". So-called TXT records may provide more information on a service or subservice. In addition to TXT records providing information on e.g. the IP address and port number the relay is using for its TCP/IP input/output, a DPP Relay could include TXT records like e.g.
- channels=81/1,115/36 (meaning channel 1 in the 2.4 GHz band and channel 36 in the 5 GHz band)
- channels=81/1,6,11 (meaning channels 1, 6 and 11 in the 2.4 GHz band)
- frequencies=2412,2437,2462 (frequencies in MHz, channels 1, 6 and 11 in the 2.4 GHz band).

The commissioner/Configurator may then compare the channels/frequencies announced by the relay device with those it has found from the Enrollee - for example in the bootstrapping URI. Where there are multiple relays available, the commissioner/Configurator is then able to select the relay device which is using a channel/frequency being listened to by the Enrollee.

A second problem arises when there is no relay available which is using a radio channel to which the Enrollee is listening. Currently, the configuration process cannot start and the user is forced to find another solution - even to the extent of changing Configurator.

In such a situation, the Configurator may issue an instruction, using the TCP/IP connection, to the relay to switch (one of) its radios to a channel indicated by the Enrollee bootstrapping URI. The Configurator may do this after having acquired the bootstrapping URI from which it may find the channels/frequencies on which the Enrollee is listening.

A relay device supporting being commanded to switch to another channel may include an IP address / port number in its relay mDNS advertisements through which a REST API is supported to obtain commands to the relay device. This REST API may support a POST to e.g. the resource "/relay/command", which POST contains a command as data. The Content-Type of the HTTP POST request could e.g. be "application/x-www-form-urlencode".

The IP address / port number that the relay device specifies in its relay mDNS advertisements may be in the for of a TXT record like e.g.
- command_URI=192.168.0.234:8912 (IPv4 address 192.168.0.234, port 8912)
Using the above example, a command to the relay to switch channels would e.g. be a POST to
- 192.168.0.234:8912/relay/command
The command may e.g. be the following text in the body of the HTTP POST
- set_relay_channel=81/l
- <?xml version=" 1.0" encoding="UTF-8"?>
   <relay_commands>
      <!-Next is a command to switch channels-->
      <channel>8l/K/channel>
      <!-Next is a command to wait 10 seconds after which the relay device should no longer wait for an answer to the Wi-Fi message sent on behalf of the Configurator --> <wait_time>10</wait_time>
   </relay_commands>
- etc.

The relay may offer secure POSTS in the form of an HTTPS POST. The secure POST may be using
- server-side only authentication, where the relay device offers a certificate to the Configurator, so the Configurator knows it is dealing with a legitimate relay device, or
- in addition, also client-side authentication, so the relay device knows it is dealing with a legitimate Configurator, or
- non-certificate authentication using RFC 8492 (TLS-pwd) or RFC 5054 (TLS-SRP), etc.

The use of RFC 8492 (TLS-pwd) has the advantage that the password can be set in the relay device and Configurator by the owner of these, so that the owner is assured that their relay device(s) only accepts commands from their Configurator(s).

If the network is a mesh network, other relays and their mDNS advertisements may be reachable via the mesh, even where they are in different physical locations. However, where the radio technology is not Wi-Fi or the network is composed of sub-network with bridges, the other relays may not be reachable via the network itself and the Configurator may have to be moved physically to that location in order to establish an IP connection with that relay. This would require informing the user and having them take the appropriate action, which is also undesirably burdensome for the user. The user may then prefer to have the Configurator command the current relay to change its settings.

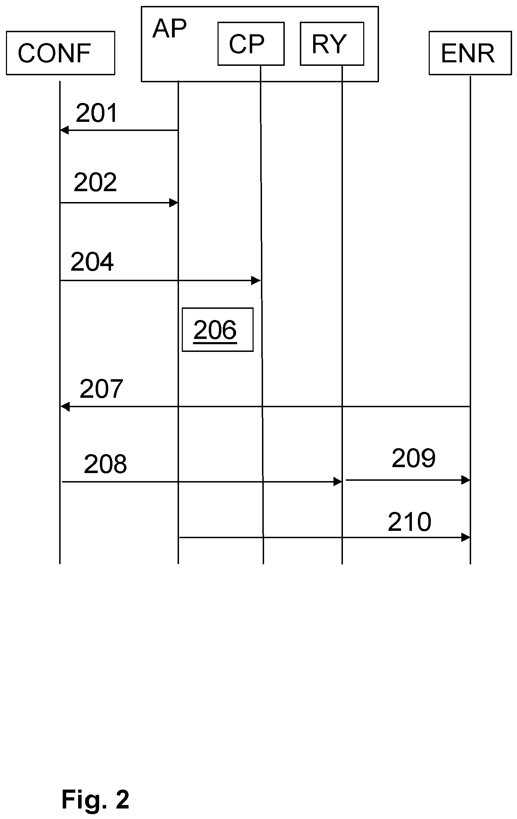

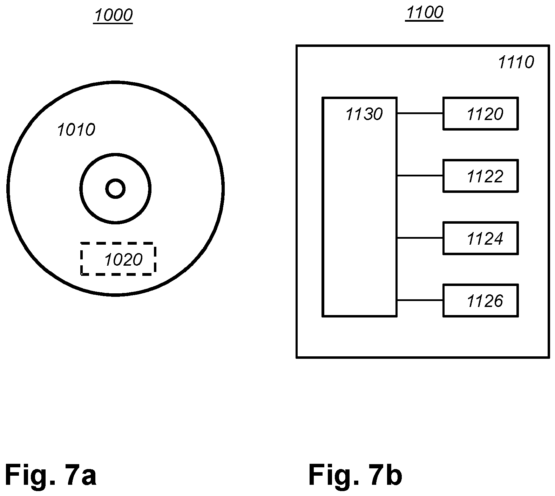

Fig. 7a shows a computer readable medium 1000 having a writable part 1010 comprising a computer program 1020, the computer program 1020 comprising instructions for causing a processor system to perform one or more of the above methods in the system as described with reference to Figs. 1-6. The computer program 1020 may be embodied on the computer readable medium 1000 as physical marks or by means of magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said methods.

Typically, devices that execute the above process, each comprise a processor coupled to a memory containing appropriate software code stored at the devices; for example, that software may have been downloaded and/or stored in a corresponding memory, e.g., a volatile memory such as RAM or a non-volatile memory such as Flash (not shown). The devices may for example be equipped with microprocessors and memories (not shown). Alternatively, the devices may, in whole or in part, be implemented in programmable logic, e.g., as field-programmable gate array (FPGA). The devices and server may be implemented, in whole or in part, as a so-called application-specific integrated circuit (ASIC), i.e. an integrated circuit (IC) customized for their particular use. For example, the circuits may be implemented in CMOS, e.g., using a hardware description language such as Verilog, VHDL etc.

Fig. 7b shows in a schematic representation of a processor system 1100 according to an embodiment of the network access device, Configurator, or Configurator interface or Configurator controller as described with reference to Figs. 1-6. The processor system may be embodied by one or more circuits 1110, e.g. each comprising one or more integrated circuits. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., a transceiver with an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be coupled to each other via an interconnect 1130, say a bus. The processor system 1110 may be arranged for contact and/or contact-less communication, using an antenna and/or connectors, respectively.

Software may only include those steps taken by a particular sub-entity of the system. The software may be stored in a suitable storage medium, such as a hard disk, a floppy, a memory etc. The software may be sent as a signal along a wire, or wireless, or using a data network, e.g., the Internet. The software may be made available for download and/or for remote usage on a server. A method according to the invention may be executed using a bit stream arranged to configure programmable logic, e.g., a field-programmable gate array (FPGA), to perform the method. It will be appreciated that the software may be in the form of source code, object code, a code intermediate source and object code such as partially compiled form, or in any other form suitable for use in the implementation of the methods according to the invention. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth.

It will be appreciated that, for clarity, the above description describes embodiments of the invention with reference to different functional units and processors. However, it will be apparent that any suitable distribution of functionality between different functional units or processors may be used without deviating from the invention. For example, functionality illustrated to be performed by separate units, processors or controllers may be performed by the same processor or controllers. Hence, references to specific functional units are only to be seen as references to suitable means for providing the described functionality rather than indicative of a strict logical or physical structure or organization. The invention can be implemented in any suitable form including hardware, software, firmware or any combination of these.

It should be noted that in this document the word 'comprising' does not exclude the presence of elements or steps other than those listed and the word 'a' or 'an' preceding an element does not exclude the presence of a plurality of such elements, that any reference signs do not limit the scope of the claims, that the invention may be implemented by means of both hardware and software, and that several 'means' or 'units' may be represented by the same item of hardware or software, and a processor may fulfil the function of one or more units, possibly in cooperation with hardware elements. Furthermore, the invention is not limited to the embodiments, and the invention lies in each and every novel feature or combination of features described above or recited in mutually different dependent claims. Also, the formulations 'at least one of A, B and C' should be understood to mean a 'one or more elements from a group of elements comprising A, B and C'.

In summary, this disclosure relates to, relay, Configurator and network access devices. There is a relay device, the relay device being arranged to cooperate with a Configurator according to a configuration protocol that enables to configure wireless networks and at least one wireless communication device to associate with a wireless network, the configuration protocol using a configuration connection, the relay device being arranged to communicate with the at least one wireless communication device, via a transceiver, according to a wireless communication protocol, the relay device comprising a processor arranged to provide to the Configurator, via the configuration connection an indication of a configuration of the transceiver.

In many cases, relay devices may be coupled to transceivers that are already set up for a wireless communication network and will already set up to use certain channels and/or frequencies. New Enrollee devices may not be listening on those channels/frequencies. In such a situation, unless the transceiver being used by the relay device changes channel/frequency, the configuration attempt will not succeed because, at some point, the Enrollee device will fail to respond to a message sent to it via the transceiver.

DPP Relays are frequently part of an AP. The most important goal of an AP is making the highest throughput possible for the associated Wi-Fi devices ("STAs"). Therefore, an AP wants to remain on the same channel for each of its radios (an AP may have more than one radio, each working on another channel in the same or different frequency bands).

The Configurator, if it knows the channels the Enrollee is listening on, e.g. from the channel ABNF rule in the DPP Bootstrapping URI (section 5.2.1 of [DPP]), will want to select the relay device that is actually using at least one of the channels that the Enrollee is listening on. However, the Configurator does not know which channel(s) the relay's radio(s) is/are using.

By receiving information on the configuration, the Configurator may be able to select a relay device which is coupled to a suitable configured transceiver (where multiple options of a relay device-transceiver are available). Also, where the function controlling the transceiver permits, the Configurator may be able to change the configuration of the transceiver to one which suits the Enrollee device.

According to an embodiment, the processor is arranged to convert messages between a first format of the configuration protocol and a second format of the wireless communication protocol. This allows Configurators that only use an IP-based protocol to configure an Enrollee for a wireless communication protocol.

According to an embodiment, the indication of a configuration comprises an indication of at least one parameter value, the at least one parameter being at least one from the set of radio channel and a frequency, the parameter value corresponding to a setting of the transceiver. The Configurator will then be able to compare the settings of channel and/or frequency of the transceiver with those of the Enrollee device.

According to an embodiment the processor is arranged to receive a command the command comprising a setting for the transceiver, and, responsive to the command, cause the transceiver to use the setting for communication using the wireless communication protocol. Thus the Configurator can cause and ensure that the transceiver will use a channel/frequency that the Enrollee device is listening on.

According to an embodiment, the indication is provided using an mDNS advertisement. This makes them easily available to Configurators using IP-based protocols.

According to an embodiment, the configuration protocol is the Device Provisioning Protocol (DPP) over TCP/IP.

According to an aspect, there is provided a network access device, the network access device comprising a transceiver for wireless communication with the wireless communication device according to a wireless communication protocol and comprising at least one relay device.

According to an aspect, there is provided a Configurator arranged to cooperate with the relay device according to a configuration protocol that enables the Configurator to configure wireless networks and at least one wireless communication device to associate with a wireless network, the Configurator comprising a communication unit arranged to communicate according to a wired and/or wireless network communication protocol; and a processor system arranged to establish, via the communication unit, a configuration connection according to the wired and/or wireless network communication protocol to the relay device, the Configurator being arranged, while cooperating with the relay device, to receive from the network access device, an indication of a configuration of the transceiver and to receive, via an out-of-band channel an information from the at least one wireless communication device acting as an Enrollee device, the Enrollee device having an Enrollee transceiver arranged for wireless communication using the wireless communication protocol of the relay device, the information comprising an indication of a parameter value of the Enrollee transceiver.

According to an embodiment, the Configurator is arranged to select a relay device from a plurality of relay devices, the selection being based on a correspondence between the indication the of a configuration of the Enrollee transceiver and indication of a configuration of the transceiver.

According to an embodiment, the processor is arranged to send a command via the configuration connection, to the network access device, the command comprising a parameter value for the transceiver of the network access device.

According to an embodiment, the Configurator is arranged to engage, while cooperating with the relay device via the configuration connection, in configuration of a wireless communication device to enable association of the wireless communication device with the wireless network.

According to an aspect, there is provided, a method for use in a relay device, the relay device being arranged to cooperate with a Configurator according to a configuration protocol that enables to configure wireless networks and a wireless communication device to associate with a wireless network, and being arranged to communicate with a network access device, the network access device having a transceiver, and being arranged to communicate, via the transceiver, with the wireless communication device according to a wireless communication protocol, the method comprising establishing a configuration connection according to the network communication protocol by association of the Configurator to the configuration network, providing to the Configurator, via the configuration network and indication of a parameter of the transceiver.

According to an embodiment, the method comprises converting messages between a first format of the configuration protocol and a second format of the wireless communication protocol.

According to an embodiment, the providing to the Configurator of the indication of a configuration of the transceiver is performed using an mDNS advertisement.

According to an embodiment, the method comprises receiving a command from the Configurator to change a parameter of the transceiver to a value provided by the Configurator.

According to an aspect, there is provided a method for use in a Configurator device as defined above, the Configurator being arranged to cooperate with a relay device as defined above and to configure a wireless communication device, the wireless communication device having a wireless device transceiver arranged to communicate using a wireless communication protocol with the relay device, the method comprising receiving a first indication from a relay device, the indication comprising an indication of a parameter of the transceiver, obtaining a second indication, via an out-of-band channel, of a parameter of the wireless device transceiver, and sending a command to the relay device to cause the network access device to adapt a parameter of the transceiver according to a value provided by the Configurator.

According to an aspect, there is provided a Configurator device, the Configurator being arranged to cooperate with a relay device and to configure a wireless communication device, the wireless communication device having a wireless device transceiver arranged to communicate using a wireless communication protocol with the relay device, the method comprising
- receiving a first indications from a plurality of relay devices, the indication comprising an indication of a parameter of the transceiver;
- obtaining a second indication, via an out-of-band channel, of a parameter of the wireless device transceiver, and
selecting a relay device according to a correspondence between the first and second indications to be used for configuration of the wireless network device

According to an embodiment, the method comprises sending a command to the network access device to cause the network access device to adapt a parameter of the transceiver according to a value provided by the Configurator.

According to an embodiment, the provisioning protocol is the Device Provisioning Protocol (DPP) over TCP/IP.

According to an aspect, there is provided a computer program product on a computer readable medium, the computer program product being arranged, when run on a processor of a device, causes the device to perform the methods described above.

### Referenced documents:

[802.11] IEEE Computer Society, "IEEE Standard for Information Technology-Telecommunications and Information Exchange Between Systems - Local and Metropolitan Area Networks - Specific requirements Part 11: Wireless LAN Medium Access Control (MAC) and Physical Layer (PHY) Specifications," (IEEE Std. 802.11-2016), December 2016.
[802.1Q] IEEE Standard for Local and metropolitan area networks--Bridges and Bridged Networks, 2014.
[DPP] Device Provisioning Protocol - Technical Specification - Version 2.0, Wi-Fi Alliance, 2020, (https://www.wi-fi.org/downloads-public/Wi-Fi_Easy_Connect_Specification_v2.0.pdf/35330)
[RFC 6763] RFC 6763, DNS-Based Service Discovery, February 2013, https://datatracker.ietf.org/doc/rfc6763 .
[WiFi_EO] Opportunistic Wireless Encryption Specification, Version 1.1, Wi-Fi Alliance, 2020, (https://www.wi-fi.org/file-member/opportunistic-wireless-encryption-specification)
[WPA3] WPA3^{™} Specification, Version 3.0, December 14, 2020, Wi-Fi Alliance.

## Claims

1. A relay device (164, 165), the relay device being arranged to cooperate with a Configurator (120) according to a configuration protocol that enables to configure wireless networks and at least one wireless communication device (110) to associate with a wireless network, the configuration protocol using a configuration connection (154, 155, 173), the relay device being arranged to communicate with the at least one wireless communication device (110), via a transceiver 131, according to a wireless communication protocol,
the relay device comprising a processor (132) arranged
to provide to the Configurator (120), via the configuration connection (154, 155, 173) an indication of a configuration of the transceiver (131).

2. The relay device of claim 1 wherein the processor is arranged to convert messages between a first format of the configuration protocol and a second format of the wireless communication protocol

3. The relay device of claim 1 or 2 wherein the indication of a configuration comprises an indication of at least one parameter value, the at least one parameter being at least one from the set of radio channel and a frequency, the parameter value corresponding to a setting of the transceiver.

4. The relay device of claim 3 wherein the processor is arranged to receive a command the command comprising a setting for the transceiver, and, responsive to the command, cause the transceiver to use the setting for communication using the wireless communication protocol.

5. The relay device of claim 3 or 4 wherein the indication is provided using an mDNS advertisement.

6. The relay device of any of claims 2 - 5 when dependent on claim 2 wherein the configuration protocol is the Device Provisioning Protocol (DPP) over TCP/IP.

7. A network access device (130), the network access device comprising a transceiver (131) for wireless communication with the wireless communication device (110) according to a wireless communication protocol and comprising at least one relay device (164, 165) according to claims 1 - 5.

8. A Configurator (120) arranged to cooperate with the relay device (164, 165) as defined in claim 1 - 5 according to a configuration protocol that enables the Configurator to configure wireless networks and at least one wireless communication device (110) to associate with a wireless network, the Configurator comprising
a communication unit (121) arranged to communicate according to a network communication protocol; and
a processor system (122) arranged to establish, via the communication unit, a configuration connection (154, 155 or 173) according to the wired and/or wireless network communication protocol to the relay device (164, 165),
the Configurator being arranged, while cooperating with the relay device (164, 165)
- to receive from the network access device, an indication of a configuration of the transceiver (131) and
- to receive, via an out-of-band channel an information from the at least one wireless communication device (110) acting as an Enrollee device (110), the Enrollee device (110) having an Enrollee transceiver arranged for wireless communication using the wireless communication protocol of the relay device of claim 1, the information comprising an indication of a parameter value of the Enrollee transceiver (111).

9. The Configurator of claim 8 arranged to select a relay device (164, 165) from a plurality of relay devices, the selection being based on a correspondence between the indication the of a configuration of the Enrollee transceiver and indication of a configuration of the transceiver (131).

10. The Configurator of any of claims 8 - 9 wherein the processor is arranged to send a command via the configuration connection, to the network access device, the command comprising a parameter value for the transceiver of the network access device.

11. The Configurator of any of claims 8 to 10, the Configurator being arranged to engage, while cooperating with the relay device via the configuration connection, in configuration of a wireless communication device to enable association of the wireless communication device with the wireless network.

12. A method for use in a relay device of claim 1, the relay device being arranged to cooperate with a Configurator (120) according to a configuration protocol that enables to configure wireless networks and a wireless communication device (110) to associate with a wireless network,
and being arranged to communicate, via a transceiver, with the wireless communication device (110) according to a wireless communication protocol,
the method comprising
- establishing a configuration connection (154, 155, 173) according to the network communication protocol by association of the Configurator to the configuration network;
- providing to the Configurator (120), via the configuration network (164, 165) and indication of a parameter of the transceiver (131).

13. The method of claim 12 comprising converting messages between a first format of the configuration protocol and a second format of the wireless communication protocol.

14. The method of claim 12 or 13 wherein the providing to the Configurator of the indication of a configuration of the transceiver is performed using an mDNS advertisement.

15. The method of any of claims 12 - 14 comprising receiving a command from the Configurator to change a parameter of the transceiver to a value provided by the Configurator.

16. A method for use in a Configurator device according to claim 8 - 11, the Configurator being arranged to cooperate with a relay device according to claim 1 - 5 and to configure a wireless communication device, the wireless communication device having a wireless device transceiver arranged to communicate using a wireless communication protocol with the relay device, the method comprising
- receiving a first indication from a relay device according to claim 1 - 5, the indication comprising an indication of a parameter of the transceiver;
- obtaining a second indication, via an out-of-band channel, of a parameter of the wireless device transceiver, and
sending a command to the relay device to cause the network access device to adapt a parameter of the transceiver according to a value provided by the Configurator.

17. A method for use in a Configurator device according to claim 8 - 11, the Configurator being arranged to cooperate with a relay device according to claim 1 and to configure a wireless communication device, the wireless communication device having a wireless device transceiver arranged to communicate using a wireless communication protocol with the relay device, the method comprising
- receiving a first indications from a plurality of relay devices according to claim 1 - 5, the indication comprising an indication of a parameter of the transceiver;
- obtaining a second indication, via an out-of-band channel, of a parameter of the wireless device transceiver, and
selecting a relay device according to a correspondence between the first and second indications to be used for configuration of the wireless network device

18. The method of claim 17 comprising sending a command to the network access device to cause the network access device to adapt a parameter of the transceiver according to a value provided by the Configurator.

19. The method of any of claims 12 - 18 wherein the configuration protocol is the Device Provisioning Protocol (DPP) over TCP/IP.

20. A computer program product on a computer readable medium, the computer program product being arranged, when run on a processor of a device according to any of claims 1 - 7, causes the device to perform the method of any of claims 12 - 15.

21. A computer program product on a computer readable medium, the computer program product being arranged, when run on a processor of a device according to any of claims 8 - 11, causes the device to perform the method of any of claims 16 - 19.
